# EUROPEAN PATENT APPLICATION

(11) **EP 1 336 438 A1**
(43) Date of publication of application: **20.08.2003**
(21) Application number: 01970204.2
(22) Date of filing: 25.09.2001
(51) Int. Cl.: B21C 37/06, B21C 37/15, B21D 17/04, B21H 7/14

(54) **METHOD OF FORMING COLD DIAMETRALLY REDUCING ROLL FOR METAL PIPE AND METAL PIPE FORMED BY THE METHOD**

(30) Priority: 25.09.2000 JP 2000290861
(71) Applicant: Nakayama Corporation, Kariya-shi, Aichi 448-0026 (JP)
(72) Inventor: ISHIKAWA, Tsuyoshi, Anjo-shi, Aichi 446-0045 (JP); TSUKADA, Yoshiya, Kariya-shi, Aichi 448-0822 (JP); SUZUKI, Ryoich, Toyota-shi, Aichi 471-0038 (JP); ISHIKAWA, Akihiro, Sumida-ku, Tokyo 131-0031 (JP); ISHIKAWA, Motoyoshi, Kariya-shi, Aichi 448-0033 (JP); ISHIKAWA, Jun, Kariya-shi, Aichi 448-0026 (JP)
(74) Representative: Lyndon-Stanford, Edward Willoughby Brooke
(86) International application number: JP0108310
(87) International publication number: WO02024366

(57) **Abstract**

A cold roll forming method for reducing the diameter of a metal pipe and a metal pipe product having the diameter reduced by such method are disclosed, wherein the method includes the steps of passing a raw metal pipe through a set of pre-forming rolls so that it can be pre-formed into an intermediate metal pipe having an elliptic, elongated circular or rectangular cross-sectional shape and then passing the intermediate metal pipe through a set of diameter-reducing rolls disposed on the downstream side of the set of pre-forming rolls so that it can have its outer circumferential length reduced to a smaller length than the outer peripheral length of the raw metal pipe while at the same time it can be re-formed into the circular cross-sectional shape or any other cross-sectional shape different from the cross-sectional shape of the intermediate metal pipe.

## Description

### BACKGROUND

### Technical Field

The present invention relates to a cold roll forming method for reducing the diameter of a metal pipe, and a metal pipe product having its diameter reduced by such method. More particularly, the present invention relates to a metal pipe so formed that its diameter can be reduced by the cold roll forming process.

### Prior Art

There are a number of conventional cold roll forming methods, more specifically, cold diameter-reducing methods, whereby the diameter of a metal pipe may be reduced. Those methods are briefly described below.

One method is provided for cold-reducing a steel pipe by using a 3-roll reducer (Japanese patent application as published under No. H7 (1995) ― 51707). This method is specifically designed to eliminate any possible irregular wall thickness that may occur on the welded joints of the steel pipe. To this end, the method includes a reducing step in which the steel pipe may be reduced by passing it through three or more reducer stands, and a sizing step in which the steel metal resulting from the reducing step may be sized by passing it through a two-roll sizing device on two or more roll stands.

Another method uses a die that has a particular pattern formed around the inner circumferential surface thereof, through a steel pipe may be passed and drawn so that the steel pipe can have the pattern of alternating grooves and ridges formed like a twill weave running along the length thereof (Japanese patent application as published under No. H7 (1995) ― 314031). More specifically, the die that has a gear-like pattern on the inner circumferential surface thereof is combined with a plug designed to reduce the wall thickness of a raw steel pipe. A finished steel pipe may thus be provided by applying a strong compressive force against the wall thickness of the steel pipe, causing the wall thickness to be deformed under the applied compressive force.

A further method is designed for cold roll forming an electro-resistance-welded steel pipe. A final-stage roll stand that is located on the extreme downstream side includes a set of rolls having a particular roll profile, the bore formed by the set of rolls being rounded to conform to the roll profile (Japanese patent application as published under No. H6 (1996) ― 142718).

The above mentioned methods may serve their respective cold-working or cold-roll-forming purposes, but any of the methods has problems in that the machine that is used to implement the method is designed for particular applications, there are restrictions on the size (angle) of a steel pipe that can be cold-worked or rolled, the number of roll stands must be increased, and the like.

### SUMMARY OF THE INVENTION

It is therefore one object of the present invention to provide a cold-working method, more specifically, cold roll forming method, that provides an easy and reliable means for cold roll forming raw metal pipes by using sets of diameter-reducing rolls, without having to increase the number of roll stands used, wherein the method may be used to roll the raw metal pipe so that it can have the reduction in its diameter, or to roll the raw metal pipe so that it can have a pattern of alternating grooves and ridges on the inner and/or outer circumferential surface (s) thereof while at the same time it can have the reduction in its diameter, or to roll a double pipe including an outer pipe and an inner pipe so that it can have the reduction in its diameter.

Another object of the present invention relates to a metal pipe product that has its diameter reduced by using such method.

The present invention solves the problems associated with the prior art methods described above, by providing a cold roll forming method that includes a pre-forming step of pre-forming a raw metal pipe into an intermediate metal pipe by passing it through a set of pre-forming rolls, followed by a diameter-reducing step of reducing the diameter of the intermediate metal pipe by passing it through a set of diameter-reducing rolls arranged in tandem with the set of pre-forming rolls.

More specifically, the cold roll forming method according to the present invention solves the above problems by allowing a raw metal pipe to be passed through a set of pre-forming rolls so that it can be formed into an intermediate metal pipe having any of the elliptic, elongated circular, rectangular and polygonal cross sectional shape, and then allowing the intermediate metal pipe to be passed through a set of diameter-reducing rolls located on the downstream of the set of pre-forming rolls so that it can be re-formed into a final metal pipe having the circular cross section or any other cross-sectional shape that is different from the cross-sectional shape of the intermediate metal pipe, thereby producing a final metal pipe having its outer circumferential length reduced to a smaller length than the outer circumferential length of the raw metal pipe.

It may be understood from the above description that in the cold roll forming method according to the present invention, the diameter-reducing process may be performed by passing a raw metal pipe through the set of pre-forming rolls so that it can be pre-formed into an intermediate metal pipe having a particular cross-sectional shape, and then passing the intermediate metal pipe through the set of diameter-reducing rolls arranged in tandem with the set of pre-forming rolls so that it can be formed into a final metal pipe having the reduction in its diameter. In this method, the pre-forming step may occur in a single pass, and the diameter-reducing step that follows the pre-forming step may also occur in a single pass. Alternatively, other methods are possible, depending upon the particular type of material on which a raw metal pipe is based, the particular wall thickness required for the raw metal pipe, the particular diameter reduction rate required for the raw metal pipe, the particular usage of the finished metal pipe, and other particular requirements. Some of these other methods are described below.

For example, the process according to one possible method may include multiple pre-forming steps that correspond to multiple sets of pre-forming rolls, and multiple diameter-reducing steps that correspond to multiple sets of diameter-reducing rolls, wherein those sets of pre-forming rolls and those sets of diameter-reducing rolls are arranged in tandem such that each set of pre-forming rolls is followed by each set of diameter-reducing rolls. This process allows for multiple passes of a raw metal pipe through each succeeding combination of one set of pre-forming rolls and one set of diameter-reducing rolls.

The process according to another possible method may include a single pre-forming step that corresponds to a single set of pre-forming rolls or multiple pre-forming steps that correspond to multiple sets of pre-forming rolls arranged in tandem with each other, and a single diameter-reducing step that corresponds to a single set of diameter-reducing rolls or multiple diameter-reducing steps that correspond to multiple sets of diameter-reducing rolls arranged in tandem with each other. The process allows for a single pass or multiple passes of a raw metal pipe through the single or multiple sets of pre-forming rolls, and allows for a single pass or multiple passes of the resulting metal pipe through the single or multiple sets of diameter-reducing rolls.

Any of the methods described above allows for the use of a raw metal pipe that has any of the cross-sectional shapes, such as circular, elliptic, elongated circular, rectangular, triangular, pentagonal, hexagonal, and other polygonal shapes.

According to the methods described above, a raw metal pipe that has any of the above-mentioned cross-sectional shapes may be pre-formed into any different cross-sectional shape other than the original cross-sectional shape of the raw metal pipe. For example, when the raw metal pipe has the circular cross-sectional shape, it may be pre-formed into any of the elliptic, elongated circular, rectangular and polygonal cross-sectional shapes. Similarly, when the raw metal pipe has any of the elliptic, elongated circular, rectangular and polygonal cross-sectional shapes, it may be pre-formed into a circular cross-sectional shape. As another example, when the raw metal pipe has the square or rectangular cross-sectional shape, it may be pre-formed into a rectangular or square cross-sectional shape, respectively. As a further example, when the raw metal pipe has the elliptic, elongated circular, rectangular or polygonal cross-sectional shape, it may be pre-formed into an elliptic, elongated circular, rectangular or polygonal cross-sectional shape, in which case any of those cross-sectional shapes may be provided by moving and rotating the raw metal pipe in the circumferential direction. It should be noted, however, that when the raw metal pipe having the circular cross section is pre-formed into the same cross-sectional shape, it is difficult to reduce the diameter of such pre-formed metal pipe at the diameter-reduction rate of more than 3 % when it is passed through the subsequent set of diameter-reducing rolls. In such case, it is desirable that the raw metal pipe having the circular cross section should be pre-formed into any of the elliptic, elongated circular, rectangular, triangular, pentagonal, hexagonal or any other polygonal cross-sectional shapes.

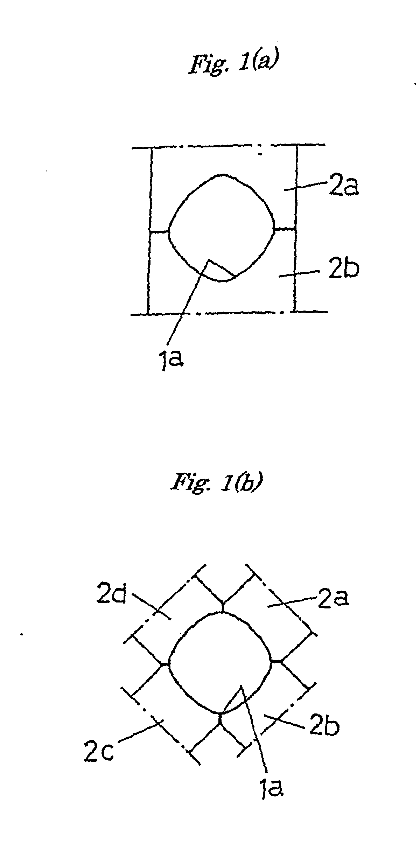

A raw metal pipe may be pre-formed into any of the cross-sectional shapes shown above, by using an appropriate number of rolls in each set of pre-forming rolls, or by providing such rolls that have the appropriate cross-sectional shape, or by combining such multiple sets of pre-forming rolls arranged in tandem. For example, when a raw metal pipe is to be pre-formed into a rectangular cross-sectional shape on one roll stand, the roll stand may include two such pre-forming rolls 2a, 2b as shown in Fig. 1 (a), or four such pre-forming rolls 2a, 2b, 2c, 2d as shown in Fig. 1 (b). Generally, when a raw metal pipe is pre-formed into an elliptic or elongated circular cross-sectional shape on one roll stand, the roll stand may include two pre-forming rolls as shown in Fig. 1 (a), and when a raw metal pipe is pre-formed into any polygonal cross-sectional shape such as triangular on one roll stand, the roll stand may include two or three pre-forming rolls. Furthermore, when a raw metal pipe is pre-formed into any polygonal cross-sectional shape such as pentagonal on one roll stand, the roll stand may include four or five pre-forming rolls. In addition, when a raw metal pipe is pre-formed into any polygonal cross-sectional shape such as hexagonal on one roll stand, the roll stand may include four or six pre-forming rolls.

In accordance with the cold roll forming methods of the present invention that have been described so far, the final metal pipe having its outer circumferential length reduced to a smaller length than the outer circumferential length of the raw metal pipe has any particular cross-sectional shape such as circular, elliptic, elongated circular, rectangular and polygonal cross-sectional shapes. This may be accomplished by using an appropriate number of rolls in each set of diameter-reducing rolls, or by providing such rolls that have the appropriate cross-sectional shape, or combining such multiple sets of diameter-reducing rolls arranged in tandem.

The metal pipe that has been pre-formed into any particular cross-sectional shape through the set of pre-forming rolls may have its diameter reduced over its total length by passing the pre-formed metal pipe through the set of diameter-reducing rolls. Alternatively, some part of a raw metal pipe may be pre-formed into any particular cross-sectional shape through the set of pre-forming rolls, and then the diameter-reducing rolling is applied by the diameter-reducing rolls on the said pre-formed part, thereby the final metal pipe in which some part of it is reduced in its outer circumferential direction is obtained.

Each of the rolls in the set of diameter-reducing rolls may have a particular pattern of grooves and ridges on the circumferential surface thereof. By passing the metal pipe pre-formed by the preceding set of pre-forming rolls through the following set of diameter-reducing rolls, the metal pipe may have a pattern of ridges and grooves formed on the surface while at the same time it may have its diameter reduced, when it is passed through the set of diameter-reducing rolls having the before described particular pattern.

In this case, the cold roll forming methods of the present invention allow the final metal pipe to have the pattern of ridges and grooves formed on the outer circumferential surface according to the pattern provided on the diameter-reducing rolls by causing the outer circumferential surface of the pre-formed metal pipe to engage the surface of the diameter-reducing rolls, while allowing the final metal pipe to have its diameter reduced by the diameter-reducing rolls. One complete revolution of the diameter-reducing rolls corresponds to one pitch of the pattern being formed on the outer circumferential surface of the final metal pipe.

In the prior art cold roll forming method mentioned earlier wherein a metal pipe can have the pattern formed thereon by drawing it through the die, the metal pipe can only have the pattern formed in its longitudinal direction. In contrast to the prior art method, the method according to the present invention allows the metal pipe to have the pattern formed on the surface such that the pattern can be changed periodically for every pitch of the diameter-reducing rolls.

For example, when the rolls in the set of diameter-reducing rolls have the pattern of ridges and grooves on the respective surfaces thereof that are running in the direction in which the rolls rotate, the final metal pipe having its diameter reduced may have the same pattern of alternating grooves and ridges on the surface thereof that are running in the longitudinal direction of the metal pipe, or running in straight lines parallel with the center axis through the metal pipe, when it is passed through the set of diameter-reducing rolls. The pattern of alternating grooves and ridges on the diameter-reducing rolls may be modified to different patterns, such as the pattern of alternating grooves and ridges that appear as oblique lines inclined at an angle with regard to the center axis through the metal pipe, the pattern of alternating groove and ridges that appear as arc lines, the pattern of alternating grooves and ridges that appear as spiral lines, and any other desired patterns of alternating grooves and ridges.

In the cold roll forming methods of the present invention described so far, a pattern molding die may be provided in the bore formed by the set of diameter-reducing rolls. This pattern molding die has a pattern of ridges and grooves that on the outer circumferential surface thereof, and can be inserted into a pre-formed metal pipe. Thus, when the metal pipe passes through the bore formed by the diameter-reducing rolls, it may have the same pattern of ridges and grooves formed by the pattern molding die on the inner circumferential surface of the metal pipe while at the same time it has its diameter reduced by the set of diameter-reducing rolls.

A raw metal pipe that will be pre-formed and then have its diameter reduced according to the methods of the present invention has a given length (in the order of 0.5 m to 10 m, for example). The pattern molding die may be supported by any supporting member that may be provided to extend along the traveling course of the metal pipe from the downstream side toward the upstream side, or from the upstream side toward the downstream side. In this way, the pattern molding die can be inserted into the metal pipe as the metal pipe passes through the bore formed by the diameter-reducing rolls. Thus, when the pattern molding die that has a particular pattern of ridges and grooves on the outer circumferential surface thereof is provided in the bore formed by the diameter-reducing rolls, the metal pipe may have that particular pattern formed on the inner circumferential surface thereof while at the same time it has its diameter reduced by the diameter-reducing rolls, as it passes through the diameter-reducing rolls.

For example, the metal pipe may have the pattern of ridges and grooves formed on the inner circumferential surface thereof such that the ridges and grooves can appear as the straight lines parallel with the center axis through the metal pipe, when the metal pipe passes through the set of diameter-reducing rolls. The supporting member that supports the pattern molding die may be provided so that it can be moved forward or backward in the traveling direction of the metal pipe. In this way, the pattern can be formed on any desired portion of the inner circumferential surface of the metal pipe while at the same it has its diameter reduced by the set of diameter-reducing rolls.

The pattern molding die having the particular pattern on its outer surface, coupled with the set of diameter-reducing rolls having the particular pattern on its outer surface, may provide the respective patterns on the inner and outer circumferential surfaces of the metal pipe as it passes through the set of diameter-reducing rolls.

The pattern molding die may be provided in the form of a roll, plug or the like, and a particular pattern of ridges and grooves may be provided on its outer circumferential surface.

Now, the embodiment of the cold roll forming method according to the present invention that is specifically designed for use in working a double pipe is described. In order to solve the problems mentioned above in the "Prior Art" section, this cold roll forming method allows for the working of a double pipe including an inner pipe having a smaller diameter and an outer metal pipe having a larger diameter, the inner pipe being inserted into the outer metal pipe. Specifically, the cold roll forming method includes a pre-forming step that corresponds to a set of pre-forming rolls and a diameter-reducing step that corresponds to a set of diameter-reducing rolls, wherein the raw double pipe may be passed through the set of pre-forming rolls so that its outer metal pipe can be pre-formed into any of the elliptic, elongated circular, rectangular and polygonal cross-sectional shapes, and then the pre-formed double pipe may be passed through the set of diameter-reducing rolls so that its outer metal pipe can be re-formed into the circular cross-sectional shape or any other cross-sectional shape different from the pre-formed cross-sectional shape of the outer metal pipe while at the same time at least the diameter of the outer metal pipe is reduced by the set of diameter-reducing rolls. In the double pipe thus finished, the inner and outer pipes are united by causing part or all of the inner circumferential surface of the outer pipe to engage the outer circumferential surface of the inner pipe tightly.

It may be appreciated that this method provides an easy means for manufacturing such double pipe products.

For example, a double pipe that may be cold-worked by this method may include an inner pipe having the triangular cross-sectional shape and an outer pipe having the circular cross-sectional shape.

When such double pipe is passed through the set of diameter-reducing rolls, it may be re-formed such that the inner circumferential length of the outer pipe can become smaller than the outer circumferential length of the inner pipe, thereby causing the inner circumferential surface of the outer pipe to engage the outer circumferential surface of the inner pipe tightly. In the double pipe thus finished, the inner pipe and outer pipe may have the respective outer circumferential surface and inner circumferential surface that engage each other tightly under the applied uniform and equal pressure and with the uniform thermal property. The final double pipe product thus obtained may provide the highly improved reliability.

In the process during which a double pipe is worked as described above, the double pipe is passed through one set of pre-forming rolls, and then through one set of diameter-reducing rolls arranged in tandem with the set of pre-forming rolls. That is, a single pass occurs through the set of pre-forming rolls, and then a single pass occurs through the set of diameter-reducing rolls. Alternatively, other methods are possible, depending upon the particular type of material on which each of the inner and outer pipes is based, the particular wall thickness required for each, the particular diameter reduction rate required for each, the particular usage of the finished double pipe, and other particular requirements. Some of those other methods are described below.

For example, the process according to one possible method may include multiple pre-forming steps that correspond to multiple sets of pre-forming rolls, and multiple diameter-reducing steps that correspond to multiple sets of diameter-reducing rolls, wherein each combination consisting of each set of pre-forming rolls and each following set of diameter-reducing rolls is arranged in tandem with each following combination so that the double pipe can pass through each succeeding combination. This process allows for multiple passes of the double pipe through each succeeding combination of one set of pre-forming rolls and one set of diameter-reducing rolls.

The process according to another possible method may include a single pre-forming step that corresponds to a single set of pre-forming rolls or multiple pre-forming steps that correspond to multiple sets of pre-forming rolls arranged in tandem with each other, and a single diameter-reducing step that corresponds to a single set of diameter-reducing rolls or multiple diameter-reducing steps that correspond to multiple sets of diameter-reducing rolls arranged in tandem with each other. The process allows for a single pass or multiple passes of the double pipe through the single or multiple sets of pre-forming rolls, and allows for a single pass or multiple passes of the resulting double pipe through the single or multiple sets of diameter-reducing rolls.

Like the methods described earlier in connection with a single metal pipe, any of the methods just described above allows for the use of a raw double pipe including an inner pipe and an outer pipe, each of which has any of the cross-sectional shapes, such as circular, elliptic, elongated circular, rectangular, triangular, pentagonal, hexagonal, and other polygonal shapes. Each of the inner and outer pipes that have any of the above-mentioned cross-sectional shapes may be pre-formed into any cross-sectional shape other than circular, elliptic, elongated circular, rectangular, triangular, pentagonal, hexagonal, and other polygonal shapes.

According to the cold roll forming methods that are used for manufacturing a double pipe, the inner and outer pipes can be united without using any bonding media. Thus, the double pipe thus obtained can provide the highly improved reliability.

When a double pipe is to be formed according to the above cold roll forming methods, the inner pipe may be inserted into the outer pipe at any part or all of the total length of the outer pipe.

When the inner pipe is inserted into the outer pipe over all of the total length of the outer pipe, the double pipe that is passed through the set of pre-forming rolls and then through the set of diameter-reducing rolls may include the inner and outer pipes that overlap each other over the total length thereof. When the inner pipe is inserted into the outer pipe at desired part of the total length of the outer pipe, the double pipe that is passed through the set of pre-forming rolls and then through the set of diameter-reducing rolls may include the inner and outer pipes that overlap each other at desired part of the total length of the outer pipe. Thus, the wall thickness on the area of the double pipe where the inner and outer pipes overlap each other can become greater than the rest of the double pipe.

The inner pipe may be made of any metal. In this case, the metal may be the same as, or different from, the metal usually used for the outer pipe. Alternatively, the inner pipe may be made of any nonmetal materials. In this case, the outer pipe may be made of steel, and the inner pipe may be made of aluminum, titanium, or synthetic resin.

In any of the above cases, after a double pipe including the inner and outer pipes is obtained by passing it through the set of pre-forming rolls and then through the set of diameter-reducing rolls, this double pipe may be used as an inner pipe, and may be inserted into another metal pipe of a greater diameter. The triple pipe thus obtained may then be passed through the set of pre-forming rolls and then through the set of diameter-reducing rolls. Other multiple-layer pipes such as a quartet pipe, quintet pipe and the like may be obtained in the same manner.

When a double pipe is manufactured by using the appropriate cold roll forming method of the present invention described above, it may be readily appreciated that the double pipe may be finished by passing it through the set of pre-forming rolls and then through the set of diameter-reducing rolls. Thus, what is required during the preliminary stage prior to the production stage is only to clean the inner and outer pipes. In other words, the inner and outer pipes need not have any thermal treatment or special machining prior to the production stage.

For the same reasons, the rolls should not be made of special roll materials, but may be made of any roll materials. The rolls need not have any surface treatment. Thus, the double pipe may be finished at less cost and more efficiently.

When the double pipe is pre-formed into any of the elliptic, elongated circular, rectangular, or polygonal cross-sectional shapes during the pre-forming process in the cold roll forming method, the pre-forming process may occur, with at least part of the inner circumferential surface of the outer metal pipe to engage the outer circumferential surface of the inner pipe. When the diameter-reducing process that follows the pre-forming process then occurs with the inner pipe being secured in position, it may occur without causing the inner pipe to be misaligned with the outer pipe. When the diameter-reducing process then occurs with part of the inner pipe being inserted into the outer pipe, only the portions of the inner and outer pipes overlapping each other can have the increased wall thickness, and this can be performed accurately.

Each of the diameter-reducing rolls that are used for the above purposes may also have a particular pattern of ridges and grooves thereon. Then, the double pipe that has been pre-formed through the set of pre-forming rolls may have the particular pattern of ridges and grooves formed thereon while it may have its diameter reduced, as the double pipe is passed through the set of the diameter-reducing rolls. The double pipe product that has thus been finished includes the outer metal pipe having the above pattern formed on the outer circumferential surface thereof.

When a raw metal pipe is worked by using any of the cold roll forming methods of the present invention, the arrangement including the sets of pre-forming rolls and the sets of diameter-reducing rolls or the raw metal pipe being worked may be moved relative to the other in the axial direction of the raw metal pipe.

When the raw metal pipe is to be moved relative to the arrangement of the pre-forming rolls and diameter-reducing rolls, this may be accomplished by arranging the sets of pre-forming rolls and the sets of diameter-reducing rolls as follows.

For example, the arrangement may includes several sets of pre-forming rolls and several sets of diameter-reducing rolls, wherein some or all of the rolls in each set of the pre-forming rolls and each set of diameter rolls may be linked so operatively that each of those rolls can be rotated. This allows the raw metal pipe to be moving, passing through each set of pre-forming rolls and then through each set diameter-reducing rolls.

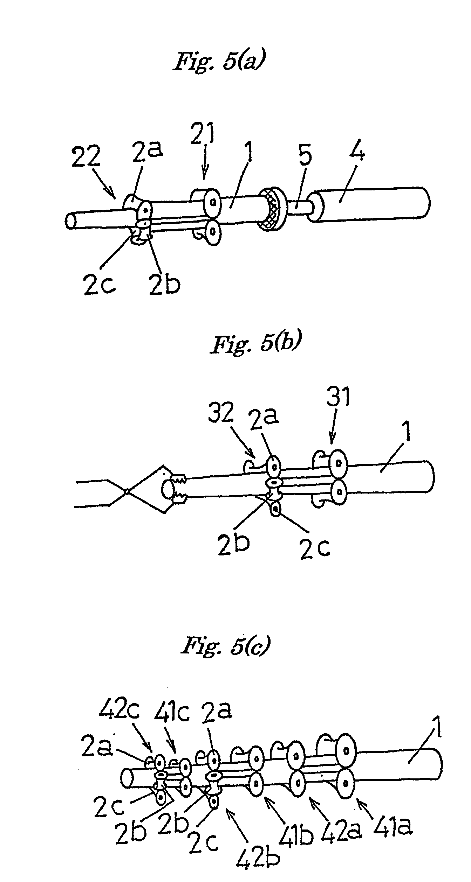

One example of this arrangement is shown in Fig. 5 (c), which is called the roll forming system (roll driving system). The example of the arrangement shown in Fig. 5 (c) includes sets of pre-forming rolls 41a, 41b, 41c, and sets of diameter-reducing rolls 42a, 42b, 42c. As seen from Fig. 5 (c), the sets of pre-forming rolls and the sets of diameter-reducing rolls are arranged in tandem, and one set of pre-forming rolls is followed by one set of diameter-reducing rolls, which is followed by another set of pre-forming rolls which is followed by another set of diameter-reducing rolls, and so. In this arrangement, the raw metal pipe may be moving so that it can pass through each succeeding combination of the sets of pre-forming rolls and diameter-reducing rolls for a total of three times. When the sets of pre-forming rolls and the sets of diameter-reducing rolls are arranged in tandem, a particular set of pre-forming rolls or diameter-reducing rolls may be driven. For example, if one set includes four rolls, two rolls in the set may be driven. In the example shown in Fig. 5 (c), the set of diameter-reducing rolls 42c includes four rolls, of which only two upper and lower rolls 2a, 2c are driven, with the remaining two side rolls 2b, 2d (not shown) being idler rolls.

In an alternative arrangement in which one set of pre-forming rolls and one set of diameter-reducing rolls include a plurality of rolls, respectively, and some or all of the rolls in the respective sets of pre-forming rolls and diameter-reducing rolls are idler rolls that are not driven by any external drive means, a raw metal pipe may be passed through those sets of pre-forming rolls and diameter-reducing rolls in any of the following ways.

One way is to push a raw metal pipe forward into the set of pre-forming rolls, and into the set of diameter-reducing rolls by the use of any pushing device. Specifically, the raw metal pipe may first be pushed into a bore formed by the set of pre-forming rolls located on the upstream side, and then may be pushed into a bore formed by the set of diameter-reducing rolls located on the downstream side of the set of pre-forming rolls. An example of this method is shown in Fig. 5 (a), which is called the extroll-forming system (which may also be called the non-driven roll pipe pushing system). Examples of the pushing device that may be used for this purpose include a hydraulically-operated cylinder, a hydraulically-operated jack and the like.

Another way is to draw a raw metal pipe out through the set of pre-forming rolls, and through the set of diameter-reducing rolls toward the downstream side by the use of a drawing device. Specifically, the raw metal pipe may first be drawn out through the bore formed by the set of pre-forming rolls and then through the bore formed by the set of diameter-reducing rolls. One example of this system is shown in Fig. 5 (b), which is called the draw bench system (which may also be called the non-driven roll pipe drawing system). Examples of the drawing device that may be used for this purpose include the combination of a chuck that is operated to catch the forward tip of the metal pipe and a hydraulically-operated jack that holds the chuck and pulls it by the traction force, or the combination of such chuck and a chain that is driven to rotate circularly for moving the chuck by the traction force.

Still another way is the combination of the two systems described above, wherein a raw metal pipe may be moved by the pushing device on the upstream side so that it can be pushed through the bore formed by the set of pre-forming rolls and through the bore formed by the set of diameter-reducing rolls, while the metal pipe may be pulled by the drawing device on the downstream side so that it can be drawn out through the bore formed by the set of pre-forming rolls and through the bore formed by the set of diameter-reducing rolls.

Which of the three systems described above should be chosen may be determined, based on various factors, such as the diameter, wall thickness, length, and rate of movement of a raw metal pipe being worked.

When any of those systems is chosen, the following considerations are required. For the extroll-forming system, the hydraulically-operated cylinder tend to be lengthy, so it would be necessary to ensure that the cylinder is not longer. For the draw bench system, it would be necessary to avoid that no deformation occurs on the end of the metal pipe being pulled. Finally, for the roll-forming system, it would be necessary to select the appropriate roll driving method.

In each of the arrangements shown in Fig. 5 (a) and Fig. 5 (b), one set of pre-forming rolls 21 or 31 and one set of diameter-reducing rolls 22 or 32 are arranged in tandem, wherein a raw metal pipe may be passed through the set of pre-forming rolls one time, and then may be passed through the set of diameter-reducing rolls one time.

Other arrangements are possible, although they are not shown. As one example, one set of pre-forming rolls 21 may be provided on the upstream side, and several sets of diameter-reducing rolls 22 that are arranged in tandem may be provided on the downstream side of the set of pre-forming rolls 21. As another example, several sets of pre-forming rolls 21 may be arranged in tandem, and one set of diameter-reducing rolls 22 may be provided on the downstream side of the set of pre-forming rolls. As a further example, several sets of pre-forming rolls 31 may be arranged in tandem, and several sets of diameter-reducing rolls 32 that are arranged in tandem may be provided on the downstream side of the corresponding sets of pre-forming rolls.

As a variation of the arrangement shown in Fig. 5 (c), which is not shown, the arrangement may be such that it includes one set of pre-forming rolls 21a, followed by one set of diameter-reducing rolls 42a that is arranged in tandem with the set of pre-forming rolls. In this arrangement, one pass may occur through the set of pre-forming rolls, followed by one pass through the set of diameter-reducing rolls. As another variation, the arrangement may be such that it includes one set of pre-forming rolls 41a, followed by one set of diameter-reducing rolls 42a, or followed by several sets of diameter-reducing rolls 42a, 42b, 42c arranged in tandem. As a further variation, the arrangement may be such that it includes several sets of pre-forming rolls 41a, 41b, 41c arranged in tandem, followed by one set of diameter-reducing roll 42a, or followed by several sets of diameter-reducing rolls 42a, 42b, 42c arranged in tandem.

In any of those variations, a metal pipe that has been pre-formed by the set of preceding pre-forming rolls may be passed through the following set of diameter-reducing rolls without causing the metal pipe to be pinched out into the gap between the rolls in the set of diameter-reducing rolls.

Any of those variations may also be applied to a double pipe, wherein the double pipe that has been pre-formed by the preceding set of pre-forming rolls may be passed through the following set of diameter-reducing rolls without causing the outer pipe to be pinched out into the gap between the rolls in the set of diameter-reducing rolls.

According to the various cold roll forming methods that have been described so far, the diameter reduction rate of more than 3 % may be attained each one time that a metal pipe is passed through each succeeding combination of the set of pre-forming rolls and set of diameter-reducing rolls. The experiments that were conducted by the inventors of the present invention show that the diameter reduction rate of at most 22 % can be attained for each pass of the metal pipe through each combination of the set of pre-forming rolls and set of diameter-reducing rolls. The diameter reduction rate may be varied in the range of between at least 3 % and at most 22%, depending on the respective types of the pre-forming rolls and diameter-reducing rolls that are used.

For example, when a raw metal pipe is made of iron, and has the wall thickness of 1.6 mm and the outer diameter of 48.6 mm, the diameter reduction rate of 22 % may be attained by passing the raw metal pipe through the pre-forming roll stand on which two pre-forming rolls are mounted in this case so that it can be pre-formed into an intermediate metal pipe having the triangular cross-sectional shape, and then by passing the intermediate metal pipe through the diameter reduction stand on which three diameter-reducing rolls are mounted in this case so that it can have its diameter reduced by compressing the metal pipe in the direction of the compression with its triangle vertexes being directed inwardly. In another example, the set of two pre-forming rolls is used for the same metal pipe as in the previous example, but the relative positions between the two rolls are changed and the set of diameter-reducing rolls is replaced by another set of diameter-reducing rolls. The diameter reduction rate that may be attained in this example is equal to 8 %.

As a further example, when a raw metal pipe is made of iron, and has the wall thickness of 4.5 mm and the outer diameter of 216.3 mm, the diameter reduction rate of 11.8 % may be attained by passing the raw metal pipe through the pre-forming roll stand on which two pre-forming rolls are mounted in this case so that it can be pre-formed into an intermediate metal pipe having the rectangular cross-sectional shape, and then by passing the intermediate metal pipe through the diameter reduction stand on which four diameter-reducing rolls are mounted in this case so that it can have its diameter reduced by compressing the metal pipe in the direction of the compression with its rectangle vertexes being directed inwardly. In another example, the set of two pre-forming rolls is used for the same metal pipe as in the previous example, but the relative positions between the two rolls are changed and the set of diameter-reducing rolls is replaced by another set of diameter-reducing rolls. The diameter reduction rate that may be attained in this example is equal to 5 %.

As still another example, when a raw metal pipe is made of iron, and has the wall thickness of 4.5 mm and the outer diameter of 190.7 mm, the diameter reduction rate of 7.2 % may be attained by passing the raw metal pipe through the pre-forming roll stand on which four pre-forming rolls are mounted in this case so that it can be pre-formed into an intermediate metal pipe having the pentagonal cross-sectional shape, and then by passing the intermediate metal pipe through the diameter reduction stand on which five diameter-reducing rolls are mounted in this case so that it can have its diameter reduced by compressing the metal pipe in the direction of the compression with its pentagon vertexes being directed inwardly. In another example, the set of four pre-forming rolls is used for the same metal pipe as in the previous example, but the relative positions between the four rolls are changed and the set of diameter-reducing rolls is replaced by another set of diameter-reducing rolls. The diameter reduction rate that may be attained in this example is equal to 3 %.

When a double pipe is passed through each succeeding combination of the set of pre-forming rolls and the following set of diameter-reducing rolls arranged in tandem with the set of pre-forming sets, the diameter reduction rate for the outer pipe that may be attained ranges between 3 % and 22 % for each pass through each combination.

The metal pipes obtained by the cold roll forming methods described so far have been examined. Typically, when a raw metal pipe having the circular cross-sectional shape is pre-formed into an intermediate metal pipe having the circular cross-sectional shape, and then the intermediate metal pipe has the reduction in its diameter, the results show that the final metal pipe has the outer diameter precision that is equivalent to or better than that of the raw metal pipe. After cutting the final metal pipe to examine its outer diameter, it is found that the cutting plane has the outer diameter that remains substantially the same as the original outer diameter of the final metal pipe.

The various embodiments of the cold roll forming method according to the present invention have been described, and the various metal pipes according to the present invention that may be obtained by using those methods have also been described.

### BRIEF DESCRIPTION OF THE DRAWINGS

Fig. 1 (a) illustrates one example of a set of pre-forming rolls that may be used with the present invention, as viewed from the side thereof;
Fig. 1 (b) illustrates another example of a set of pre-forming rolls that may be used with the present invention, as viewed from the side thereof;
Fig. 2 (a) illustrates an example of a set of diameter-reducing rolls that may be used with the present invention, as viewed in cross section;
Fig. 2 (b) illustrates an example of the diameter reducing process including a set of pre-forming rolls, followed by a set of diameter-reducing rolls, as viewed from the side.
Fig. 3 (a) is a perspective view illustrating a metal pipe of the present invention;
Fig. 3 (b) is a perspective view illustrating another metal pipe of the present invention, with part of the metal pipe being broken away;
Fig. 4 illustrates the extroll-forming system according to the embodiment of the present invention that may be employed in conjunction with the method of the present invention, as viewed from the side;
Fig. 5 (a) illustrates the extroll-forming system according to the embodiment of the present invention that may be employed in conjunction with the method of the present invention, as viewed in perspective;
Fig. 5 (b) illustrates the draw bench system according to the embodiment of the present invention that may be employed in conjunction with the method of the present invention, as viewed in perspective; and
Fig. 5 (c) illustrates the roll-forming system according to the embodiment of the present invention that may be employed in conjunction with the method of the present invention.

### BEST MODES OF EMBODYING THE INVENTION

Several preferred embodiments of the present invention will now be described in further detail by referring to the accompanying drawings. It should be understood that the arrangements, shapes and relative positions of the component elements or parts that are described below in connection with each of those embodiments are only shown by way of example, and are described in general terms so as to enable any person skilled in the art to understand the underlying concepts and principles of the present invention. It should also be understood that the specific values and compositions (materials) that are shown below for the component elements or parts are given for the illustrative purposes. It may be appreciated by any person skilled in the art that the present invention is not limited to the embodiments that are provided in the following description, and therefore may be varied in many ways without departing from the spirit and scope of the present invention as defined in the appended claims.

### (Embodiment 1)

A raw pipe 1 that is subject to the diameter-reducing process is made of steel, and is originally formed into a round shape having the outer diameter of 216.3 mm. As an initial step, the round steel pipe 1 may be passed through a set of pre-forming rolls 2a and 2b so that it can be formed into an intermediate steel pipe 1a having the rectangular cross section (Fig. 1 (a)).

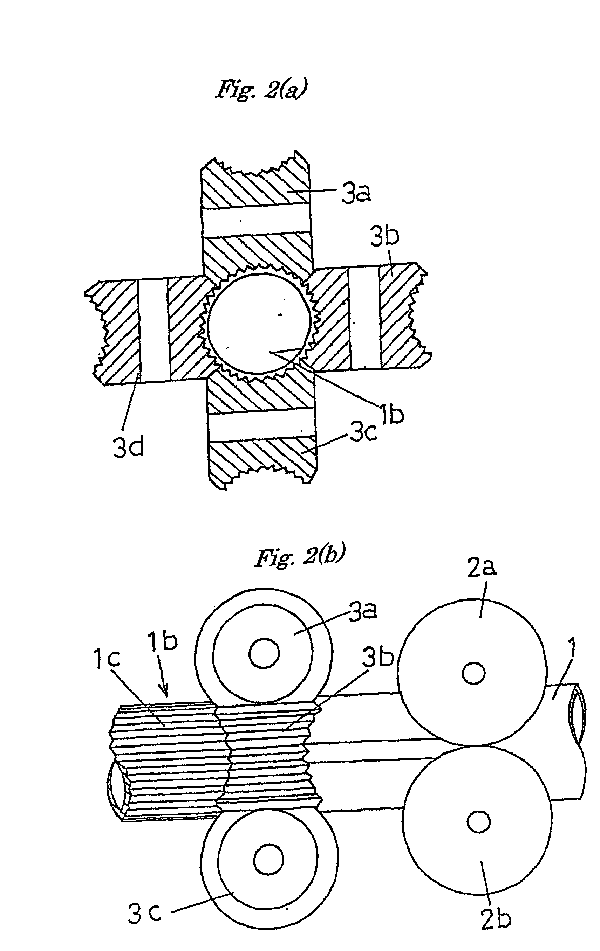

Then, the intermediate steel pipe 1a may be passed through a set of diameter-reducing rolls 3a, 3b, 3c and 3d so that it can be formed into a round steel pipe 1b having a reduced diameter (Figs. 2 (a) and (b)).

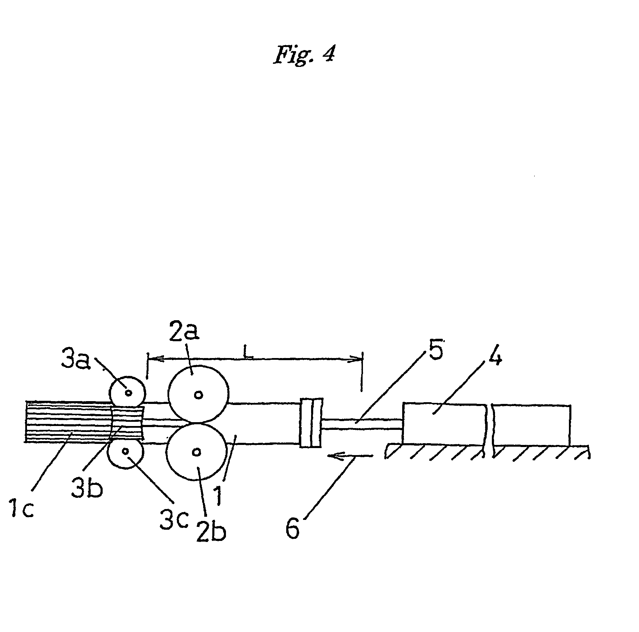

During the diameter-reducing process, a hydraulically-operated cylinder 4 may be operated so that its piston rod 5 can be moved forward in the direction of an arrow 6 in Fig. 4, moving the round steel pipe 1 in that direction. There are cases in which the size, particularly the length, of the hydraulically-operated cylinder 4 should be reduced into a particular size or length for some reasons. In those cases, the stroke L of the piston rod 5 that can travel to its full length might become shorter than the length of a particular round steel pipe 1 being processed. To avoid this, the piston rod 5 should preferably be provided with an auxiliary rod that may be interposed between the round steel pipe 1 and the piston rod 5. In this way, the stroke L of the piston rod 5 can be extended by the length of the auxiliary rod.

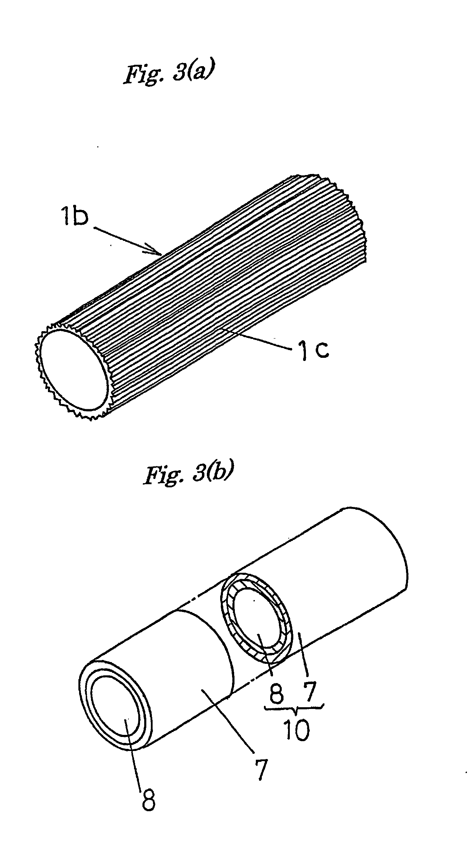

As shown in Fig. 2 (a), each of the rolls 3a, 3b, 3c, 3d in the set of diameter-reducing rolls has a particular pattern of alternating grooves and ridges formed around the outer circumferential surface thereof, running in the direction in which each roll rotates. When the intermediate steel pipe 1a is then passed through the set of diameter-reducing rolls, the output, which is represented by the round steel pipe 1b (Fig. 3 (a)), may have the reduction in its diameter, while at the same time it may have the same pattern of ridges and grooves 1c formed around the outer circumferential surface, running along the length of the round steel pipe 1b.

Specifically, the raw round steel pipe 1 has the outer diameter of 216.3 mm and the wall thickness of 8.2 mm. When it is passed through the set of pre-forming rolls and then through the set of diameter-reducing rolls, the round steel pipe 1b that is thus finished may have the reduced diameter of 190.7 mm and the pattern of sixty (60) alternating grooves and ridges 1c formed to a depth of 0.7 mm on the outer circumferential surface, running along the length. In this case, the finished steel pipe had its diameter reduced at the diameter reduction rate of 11.8 %.

The set of pre-forming rolls 2a, 2b shown in Fig. 1 (a) may be replaced by another set of pre-forming rolls 2a, 2b, 2c, 2d shown in Fig. 1 (b).

In this case, the raw pipe is also made of steel, and has a round shape. It should be noted, however, that the raw pipe may also have any other cross sectional shape, and may also be made of any other material such as stainless steel, aluminum and the like.

### (Embodiment 2)

A raw pipe 7 is also made of steel, and has a round shape. Differently from the preceding embodiment, the raw pipe 7 is a double pipe including an additional pipe 8 made of synthetic resin that is inserted into the raw steel pipe 7. The diameter reducing process includes the pre-forming step, followed by the diameter reducing step, like in the preceding embodiment, but differs in that each of the rolls 3a, 3b, 3c, 3d in the set of diameter-reducing rolls has no pattern of ridges and grooves on its circumferential surface.

By passing the raw steel pipe 7 through the pre-forming step and then through the diameter reducing step, a double pipe 10 may be obtained, including the outer steel pipe 7 and the inner synthetic resin pipe 8 as shown in Fig. 3 (b).

Specifically, when the raw steel pipe 7 is passed through the diameter reducing step, it may have the reduction in its diameter. In the double pipe 10 thus obtained, the outer steel pipe 7 and the inner synthetic resin pipe 8 can be united by causing the inner circumferential wall of the outer steel pipe 7 to engage the outer circumferential wall of the inner synthetic resin pipe 8 under the uniform and equal pressure.

### (Embodiment 3)

A steel pipe "STKM13A" (carbon steel pipes for machine structural purposes) as specified in the relevant JIS specifications is used as a raw steel pipe. The raw steel pipe has the outer diameter of 60.5 mm and the wall thickness of 2.9 mm.

This embodiment uses the process shown in Fig. 5 (b). The diameter reducing process may be performed by passing the raw steel pipe through a set of two pre-forming rolls so that it can be formed into an intermediate steel pipe having the elliptic cross-sectional shape, and then by passing the intermediate steel pipe through a set of two diameter-reducing rolls so that it can be formed into a final steel pipe having the reduction in its diameter. The final steel pipe has the outer diameter of 58.2 mm, which corresponds to the diameter reduction rate of 3.8 %.

### (Embodiment 4)

A steel pipe "STKM13A" (carbon steel pipes for machine structural purposes) as specified in the relevant JIS specifications is used as a raw steel pipe. The raw steel pipe has the outer diameter of 63.5 mm and the wall thickness of 1.2 mm.

This embodiment uses the process shown in Fig. 5 (b). The diameter reducing process may be performed by passing the raw steel pipe through a set of two pre-forming rolls so that it can be formed into an intermediate steel pipe having the rectangular cross-sectional shape, and then by passing the intermediate steel pipe through a set of four diameter-reducing rolls so that it can be formed into a final steel pipe having the reduction in its diameter. The final steel pipe has the outer diameter of 60.0 mm, which corresponds to the diameter reduction rate of 5.5 %.

### (Embodiment 5)

A steel pipe "STKM13A" (carbon steel pipes for machine structural purposes) as specified in the relevant JIS specifications is used as a raw steel pipe. The raw steel pipe has the outer diameter of 63.5 mm and the wall thickness of 2.3 mm.

This embodiment uses the process shown in Fig. 5 (b). The diameter reducing process may be performed by passing the raw steel pipe through a set of two pre-forming rolls so that it can be formed into an intermediate steel pipe having the rectangular cross-sectional shape, and then by passing the intermediate steel pipe through a set of four diameter-reducing rolls so that it can be formed into a final steel pipe having the reduction in its diameter. The final steel pipe has the outer diameter of 58.2 mm, which corresponds to the diameter reduction rate of 8.3 %.

### (Embodiment 6)

An aluminum pipe "A5052TD" as specified in the relevant JIS specifications is used as a raw aluminum pipe. The raw aluminum pipe has the outer diameter of 60.0 mm and the wall thickness of 3.0 mm.

This embodiment uses the process shown in Fig. 5 (b). The diameter reducing process may be performed by passing the raw aluminum pipe through a set of four pre-forming rolls so that it can be formed into an intermediate aluminum pipe having the rectangular cross section, and then by passing the intermediate aluminum pipe through a set of four diameter-reducing rolls so that it can be formed into a final aluminum pipe having the reduction in its diameter. The final aluminum pipe has the outer diameter of 58.2 mm, which corresponds to the diameter reduction rate of 3.0 %.

### (Embodiment 7)

A raw pipe is a double pipe including an outer steel pipe having the outer diameter of 63.5 mm and the wall thickness of 1.2 mm, and an inner steel pipe having the outer diameter of 60.0 mm and the wall thickness of 1.2 mm, the inner steel pipe being inserted into the outer steel pipe over the total length thereof. The outer and inner steel pipes both use a steel pipe "STK400-E-G" as specified in the relevant JIS specifications.

This embodiment uses the process shown in Fig. 5 (a). The diameter reducing process may be performed by passing the raw steel pipe through a set of two pre-forming rolls so that it can be formed into an intermediate steel pipe having the elliptic cross-sectional shape, and then by passing the intermediate steel pipe through a set of two diameter reducing rolls so that it can be formed into a final double-steel pipe having the reduction in its diameter. The final double-steel pipe has the outer diameter of 60.0 mm, which corresponds to the diameter reduction rate of 5.5 %.

In the final double-steel pipe thus obtained, the outer and inner steel pipes may be united by causing the inner circumferential wall of the outer steel pipe to engage the outer circumferential wall of the inner steel pipe tightly.

### (Embodiment 8)

A raw pipe includes an outer steel pipe having the outer diameter of 63.5 mm and the wall thickness of 1.2 mm, and an inner aluminum pipe having the outer diameter of 60.0 mm and the wall thickness of 3.0 mm, the inner aluminum pipe being inserted into the outer steel pipe over the total length thereof. The outer steel pipes uses a steel pipe "STK400-E-G" as specified in the relevant JIS specifications, and the inner aluminum pipe uses an aluminum pipe "A5052TD" as specified in the relevant JIS specifications.

This embodiment uses the process shown in Fig. 5 (b). The diameter reducing process may be performed by passing the raw pipe through a set of two pre-forming rolls so that it can be formed into an intermediate pipe having the rectangular cross-sectional shape, and then by passing the intermediate pipe through a set of four diameter reducing rolls so that it can be formed into a final double pipe having the reduction in its diameter. The final double pipe has the outer diameter of 60.0 mm, which corresponds to the diameter reduction rate of 5.5 %.

In the final double pipe thus obtained, the outer steel pipe and the inner aluminum pipe may be united by causing the inner circumferential wall of the outer steel pipe to engage the outer circumferential wall of the inner aluminum pipe tightly.

### (Embodiment 9)

A steel pipe "STKM13A" (carbon steel pipes for machine structural purposes) as specified in the relevant JIS specifications is used as a raw steel pipe. The raw steel pipe has the outer diameter of 63.5 mm and the wall thickness of 1.2 mm.

This embodiment uses the process shown in Fig. 5 (c). The diameter reducing process may be performed by using several sets of pre-forming rolls and several sets of diameter reducing rolls. Specifically, the raw steel pipe may first be passed through a first set of two pre-forming rolls so that it can be formed so as to have the elliptic cross-sectional shape, the resulting steel pipe may then be passed through a first set of two diameter reducing rolls so that it can have the reduction in its diameter, the resulting steel pipe may then be passed through a second set of two pre-forming rolls so that it can be formed so as to have the elliptic cross section, the resulting steel pipe may then be passed through a second set of four diameter reducing rolls so that it can have the further reduction in its diameter, the resulting steel pipe may then be passed through a third set of two pre-forming rolls so that it can be formed so as to have the elliptic cross-sectional shape, and the resulting steel pipe may finally be passed through a third set of four diameter reducing rolls so that it can have the further reduction in its diameter. The final steel pipe has the outer diameter of 56 mm, which corresponds to the diameter reduction rate of 11.8 % by the preceding three sets of the pair of pre-forming rolls and diameter reducing rolls.

### (Embodiment 10)

A steel pipe "STKM13A" (carbon steel pipes for machine structural purposes) as specified in the relevant JIS specifications is used as a raw steel pipe. The raw steel pipe has the outer diameter of 63.5 mm and the wall thickness of 1.6 mm.

This embodiment uses the process shown in Fig. 5 (b). The diameter reducing process may be performed by passing the raw steel pipe through a set of two pre-forming rolls so that it can be formed into an intermediate steel pipe having the triangular cross-sectional shape, and then by passing the intermediate steel pipe through a set of three diameter reducing rolls so that it can have the reduction in its diameter. The final steel pipe thus obtained has the outer diameter of 49 mm, which corresponds to the diameter reduction rate of 22 %.

### (Embodiment 11)

A steel pipe "STKM13A" (carbon steel pipes for machine structural purposes) as specified in the relevant JIS specifications is used as a raw steel pipe. The raw steel pipe has the outer diameter of 63.5 mm and the wall thickness of 1.2 mm.

This embodiment uses the process shown in Fig. 5 (b). The diameter reducing process may be performed by passing the raw steel pipe through a set of four pre-forming rolls so that it can be formed into an intermediate steel pipe having the rectangular cross-sectional shape, and then by passing the intermediate steel pipe through a set of four diameter reducing rolls so that it can have the reduction in its diameter. The final steel pipe thus obtained has the outer diameter of 56 mm, which corresponds to the diameter reduction rate of 11.8 %.

### (Embodiment 12)

A steel pipe "STKM13A" (carbon steel pipes for machine structural purposes) as specified in the relevant JIS specifications is used as a raw steel pipe. The raw steel pipe has the outer diameter of 63.5 mm and the wall thickness of 1.2 mm.

This embodiment uses the process shown in Fig. 5 (b). The diameter reducing process may be performed by passing the raw steel pipe through a set of five pre-forming rolls so that it can be formed into an intermediate steel pipe having the pentagonal cross-sectional shape, and then by passing the intermediate steel pipe through a set of five diameter reducing rolls so that it can have the reduction in its diameter. The final steel pipe thus obtained has the outer diameter of 58.9 mm, which corresponds to the diameter reduction rate of 7.2 %.

### (Embodiment 13)

A steel pipe "STK400-E-G" (carbon steel pipes for general purposes) as specified in the relevant JIS specifications is used as a raw steel pipe. The raw steel pipe has the outer diameter of 190.7 mm and the wall thickness of 4.5 mm.

This embodiment uses the process shown in Fig. 5 (a). The diameter reducing process may be performed by passing the raw steel pipe through a set of two pre-forming rolls so that it can be formed into an intermediate steel pipe having the rectangular cross-sectional shape, and then by passing the intermediate steel pipe through a set of four diameter reducing rolls so that it can have the reduction in its diameter. The final steel pipe thus obtained has the outer diameter of 180 mm, which corresponds to the diameter reduction rate of 5.0 %.

### (Embodiment 14)

A steel pipe "STK400-E-G" (carbon steel pipes for general purposes) as specified in the relevant JIS specifications is used as a raw steel pipe. The raw steel pipe has the outer diameter of 216.3 mm and the wall thickness of 10.3 mm.

This embodiment uses the process shown in Fig. 5 (a). The diameter reducing process may be performed by passing the raw steel pipe through a set of four pre-forming rolls so that it can be formed into an intermediate steel pipe having the rectangular cross-sectional shape, and then by passing the intermediate steel pipe through a set of four diameter reducing rolls so that it can have the reduction in its diameter. The final steel pipe thus obtained has the outer diameter of 190.7 mm, which corresponds to the diameter reduction rate of 11.0 %.

### (Embodiment 15)

A steel pipe "STK400-E-G" (carbon steel pipes for general purposes) as specified in the relevant JIS specifications is used as a raw steel pipe. The raw steel pipe has the outer diameter of 216.3 mm and the wall thickness of 4.5 mm.

This embodiment uses the process shown in Fig. 5 (a). The diameter reducing process may be performed by passing the raw steel pipe through a set of two pre-forming rolls so that it can be formed into an intermediate steel pipe having the rectangular cross-sectional shape, and then by passing the intermediate steel pipe through a set of four diameter reducing rolls, each roll having a pattern of ridges and grooves running in the rotational direction thereof, so that it can have the reduction in its diameter and the pattern of grooves and ridges extending along the length thereof. The final steel pipe thus obtained has the outer diameter of 190.7 mm, which corresponds to the diameter reduction rate of 11.0 %, and has the pattern of sixty (60) ridges and grooves formed to a depth of 0.6 mm.

### (Embodiment 16)

A steel pipe "STK400-E-G" (carbon steel pipes for general purposes) as specified in the relevant JIS specifications is used as a raw steel pipe. The raw steel pipe has the outer diameter of 190.7 mm and the wall thickness of 4.5 mm.

This embodiment uses the process shown in Fig. 5 (a). The diameter reducing process may be performed by passing the raw steel pipe through a set of four pre-forming rolls so that it can be formed into an intermediate steel pipe having the rectangular cross-sectional shape, and then by passing the intermediate steel pipe through a set of four diameter reducing rolls, each roll having a pattern of ridges and grooves running in the rotational direction thereof, so that it can have the reduction in its diameter and the pattern of ridges and grooves extending along the length thereof. The final steel pipe thus obtained has the outer diameter of 180 mm, which corresponds to the diameter reduction rate of 5.6 %, and has the pattern of sixty (60) ridges and grooves formed to a depth of 0.7 mm.

### (Conclusion)

In all of the embodiments 1 to 16 described above, the raw metal pipe has the circular cross-sectional shape, and the finished metal pipe also has the circular cross-sectional shape. Then, each of the finished metal pipes obtained according to those embodiments was compared with each corresponding raw metal pipe with regard to the outer diameter dimensional precision, and the results show that the finished metal pipe has the outer diameter dimensional precision that is equivalent to or better than that of the raw metal pipe. Specifically, in the embodiments 1 to 12 where the draw bench process or roll-forming process occurs, the finished metal pipe had the outer diameter dimensional precision that is within ±0.1 % of that of the raw metal pipe. In the embodiments 13 to 16 where the extroll-forming process occurs, the finished metal pipe had the outer diameter dimensional precision that is within ± 1.0 % of that of the raw metal pipe.

After cutting each of the finished metal pipes obtained in the embodiments 1 to 16 to examine its outer diameter, it was found that its outer diameter is substantially the same as that of the finished metal pipe.

The finished metal pipe obtained in any of those embodiments includes some particular areas where the wall thickness is increased during the diameter-reducing process and other areas where the wall thickness remains to be the same as the original wall thickness. Particularly, the wall thickness in those particular areas may be increased as the diameter reduction rate is increased, when the raw metal pipe goes through the most basic arrangement including one set of pre-forming rolls, followed by one set of diameter-reducing rolls. The areas where the wall thickness is increased may be determined by the shape of the pre-forming rolls as well as the shape of the diameter-reducing rolls. Thus, depending upon the particular shape of a final metal pipe that is to be formed, the particular diameter reduction rate that is to be attained, and the particular type of roll-forming that is to be employed, the set of pre-forming rolls having the appropriate shape and the set of diameter-reducing rolls having the appropriate shape may be combined. This allows the final metal pipe to have the uniform wall thickness around the entire circumference thereof when it has its diameter reduced by the cold roll forming method of the present invention.

### Industrial Applicability

According to the various embodiments of the cold roll forming method of the present invention that have been described in detail, a raw metal pipe may be passed through the set of pre-forming rolls so that it can be pre-formed into an intermediate metal pipe having a particular cross-sectional shape, and the intermediate metal pipe may then be passed through the set of diameter-reducing rolls so that it can be re-formed into a circular or any other cross-sectional shape different from the particular shape of the pre-formed metal pipe while at the same time it may have its outer circumferential length reduced to be smaller than the original length of the raw metal pipe.

It may be appreciated from the preceding description that the present invention provides an easy and reliable means for producing the finished metal pipe having its diameter reduced, or the finished metal pipe having its diameter reduced and having a particular pattern of ridges and grooves formed on either or both of the inner and outer circumferential surfaces, or the finished double pipe including the inner and outer pipes and having its diameter reduced, without having to increase the number of roll stands used for the above purpose.

The cold roll forming methods according to the present invention may be used to produce metal pipes whose wall is thick or partly thick, at less cost and in an easier manner than any of the conventional cold roll forming methods.

In the conventional cold roll forming methods that are specifically designed to produce electro-resistance-welded steel pipes and seamless steel pipes, those steel pipes that may be produced by the device that is provided for this purpose should have the particular outer diameter and wall thickness that have previously been determined. In order to produce other such steel pipes that have any other outer diameter and wall thickness than the previously determined ones, it would be required to modify the existing device or rolls, or otherwise to add another device or rolls so that they can meet the particular requirements. This would require the additional cost that leads to the high cost. In contrast, the present invention allows a metal pipe having any desired outer diameter and wall thickness to be produced easily and at low cost, since it requires no additional device or equipment.

When a metal pipe that requires the higher strength on any particular part thereof is cold-rolled by the conventional method, the metal pipe is typically cold-rolled by increasing the wall thickness or strength not only on that particular part but also on the total length. In contrast, the present invention allows such metal pipe to be cold-rolled by only using a double pipe on that part requiring the higher strength to supplement the insufficient strength there. This can be achieved at less cost since there is no need of increasing the wall thickness or strength over the total length of the metal pipe, as is the case with the conventional methods.

In this regard, one advantage of the cold roll forming method according to the present is that the part of a metal pipe that requires the higher strength may be supplemented by a double pipe in which the inner and outer pipes may be made to overlap each other on that part by simply aligning the inner pipe with the outer pipe accurately.

In the conventional methods, the part of a metal pipe that requires the sufficient strength may be supplemented by using a tailored blank including a pipe having the same diameter and a different wall thickness welded to the tailored blank. A further advantage of the present invention is that it allows a double pipe only to be provided on that part of a metal pipe that requires the increased wall thickness, without having to use such tailored blank. Thus, this can be achieved at less cost.

When a metal pipe includes portions where the decreased wall thickness may be produced when the metal pipe is bending, is bulge forming, or hydro-forming, the present invention allows a double pipe only to be provided on those portions to increase the wall thickness there. This can be achieved at less cost and in an easier manner.

According to the present invention, a metal pipe, such as a single pipe and a double pipe, may initially be pre-formed into an intermediate pipe having its diameter reduced, and the intermediate pipe may then be re-formed into the circular, triangular or any other cross-sectional shapes. Thus, the present invention provides an easy, reliable and less costly means for producing multiple-layer steel pipe products having any of the cross-sectional shapes, as compared with the prior art methods.

## Claims

1. A cold roll forming method for reducing the diameter of a raw metal pipe, including:
a pre-forming step for pre-forming the raw metal pipe into an intermediate metal pipe having any of the elliptic, elongated circular, rectangular, and polygonal cross-sectional shapes by passing the raw metal pipe through a set of pre-forming rolls; and
a diameter-reducing step for reducing the diameter of said pre-formed intermediate metal pipe having said any cross-sectional shape by passing said pre-formed intermediate metal pipe through a set of diameter-reducing rolls disposed on the downstream side of said set of pre-forming rolls, so that said pre-formed intermediate metal pipe can have its outer circumferential length reduced to a smaller length than the outer circumferential length of the raw metal pipe while at the same time it can be re-formed into a circular cross-sectional shape or any other cross-sectional shape different from said any cross-sectional shapes of said pre-formed intermediate metal pipe.

2. A cold roll forming method for reducing the diameter of a raw metal pipe, including:
a pre-forming step for pre-forming the raw metal pipe into an intermediate metal pipe having any of the elliptic, elongated circular, rectangular, and polygonal cross-sectional shapes by passing the raw metal pipe through a set of pre-forming rolls; and
a diameter-reducing step for reducing the diameter of said pre-formed intermediate metal pipe having said any cross-sectional shape by passing said pre-formed intermediate metal pipe through a set of diameter-reducing rolls disposed on the downstream side of said set of pre-forming rolls, so that said pre-formed intermediate metal pipe can have its outer circumferential length reduced to a smaller length than the outer circumferential length of the raw metal pipe while at the same time it can be re-formed into a circular cross-sectional shape or any other cross-sectional shape different from any of said cross-sectional shapes of said pre-formed intermediate metal pipe,
wherein the sequence of said pre-forming step followed by said diameter-reducing step is repeated several times.

3. A cold roll forming method for reducing the diameter of a raw metal pipe, including:
a pre-forming step for pre-forming the raw metal pipe into an intermediate metal pipe having any of the elliptic, elongated circular, rectangular, and polygonal cross-sectional shapes by passing the raw metal pipe through a set of pre-forming rolls, wherein said pre-forming step occurs one or more times; and
a diameter-reducing step for reducing the diameter of said pre-formed intermediate metal pipe having any of said cross-sectional shape by passing said pre-formed intermediate metal pipe through a set of diameter-reducing rolls disposed on the downstream side of said set of pre-forming rolls, so that said pre-formed intermediate metal pipe can have its outer circumferential length reduced to a smaller length than the outer circumferential length of the raw metal pipe while at the same time it can be re-formed into a circular cross-sectional shape or any other cross-sectional shape different from said any cross-sectional shapes of said pre-formed intermediate metal pipe,
wherein said diameter-reducing step occurs one or more times.

4. The cold roll forming method for reducing the diameter of a raw metal pipe, as defined in any one of Claims 1 through 3, wherein said set of pre-forming rolls includes several sets of pre-forming rolls, and said set of diameter-reducing rolls includes several sets of diameter-reducing rolls, and wherein some or all of the rolls in each set of pre-forming rolls and some or all of the rolls in each set of diameter-reducing rolls are rotatably linked with each other, in order to permit the raw metal pipe to be moved through each set of pre-forming rolls and each set of diameter-reducing rolls.

5. The cold roll forming method for reducing the diameter of a raw metal pipe, as defined in any one of Claims 1 through 3, wherein said set of pre-forming rolls includes several sets of pre-forming rolls and said set of diameter-reducing rolls includes several sets of diameter-reducing rolls, and wherein some or all of the rolls in each set of pre-forming rolls and some or all of the rolls in each set of diameter-reducing rolls are idler rolls that are free from the external driving force, in order to permit the raw metal pipe to be moved through each set of pre-forming rolls and each set of diameter-reducing rolls by pushing the raw metal pipe from the upstream side into the bore formed by the rolls in each set of pre-forming rolls and into the bore formed by the rolls in each set of diameter-reducing rolls, by drawing the raw metal pipe through the bore formed by the rolls in each set of pre-forming rolls and through the bore formed by the rolls in each set of diameter-reducing rolls toward the downstream side, or by pushing the raw metal pipe from the upstream side into the bore formed by the rolls in each set of pre-forming rolls and into the bore formed by the rolls in each set of diameter-reducing rolls together with by drawing the raw metal pipe through the bore formed by the rolls in each set of pre-forming rolls and through the bore formed by the rolls in each set of diameter-reducing rolls toward the downstream side.

6. The cold roll forming method for reducing the diameter of a raw metal pipe, as defined in any one of Claims 1 through 5, wherein each of the rolls in the set of diameter-reducing rolls has a pattern of ridges and grooves formed on its surface, and wherein after the raw metal pipe has been pre-formed into an intermediate metal pipe having a particular cross-sectional shape, the intermediate metal pipe is passed through the following set of diameter-reducing rolls so that it can have its diameter reduced while at the same time it can have the pattern of ridges and grooves formed on the surface thereof.

7. The cold roll forming method for reducing the diameter of a raw metal pipe, as defined in any one of Claims 1 through 6, wherein a pattern molding die is disposed in the bore formed by the rolls in the set of diameter-reducing rolls so that the pattern molding die can be inserted into the raw metal pipe when the raw metal pipe is passed through the bore formed by the rolls in the set of diameter-reducing rolls, the pattern molding die having a pattern of ridges and grooves formed on the outer circumferential surface thereof, whereby the raw metal pipe can have the pattern of ridges and grooves formed on the inner circumferential surface thereof while at the same time it can have its diameter reduced, when the raw metal pipe is passed through the bore formed by the rolls in the set of diameter-reducing rolls.

8. The cold roll forming method for reducing the diameter of a raw metal pipe, as defined in any one of Claims 1 through 7, wherein when the raw metal pipe is passed through the set of pre-forming rolls and then through the set of diameter-reducing rolls disposed on the downstream side of the set of pre-forming rolls, the raw metal pipe has its diameter reduced at the diameter reduction rate of 3 % or more.

9. A cold roll forming method for reducing the diameter of a raw pipe, wherein the raw pipe includes a double pipe comprising an outer metal pipe having a greater diameter and an inner pipe having a smaller diameter and inserted into the outer metal pipe, the method including:
a pre-forming step for pre-forming the outer metal pipe into an intermediate outer metal pipe having any of the elliptic, elongated circular, rectangular and polygonal cross-sectional shapes by passing the raw pipe through a set of pre-forming rolls; and
a diameter reducing step for re-forming the intermediate outer metal pipe into a circular cross-sectional shape or any other cross-sectional shape different from the cross-sectional shape of the intermediate outer metal pipe while at the same time reducing at least the outer circumferential length of the intermediate outer metal pipe to a smaller length than that of the original outer metal pipe, by passing the raw pipe through a set of diameter-reducing rolls disposed on the downstream side of the set of pre-forming rolls, whereby the double pipe is finished by causing the inner circumferential surface of the outer metal pipe tightly to engage some or all of the outer circumferential surface of the inner pipe.

10. A cold roll forming method for reducing the diameter of a raw pipe, wherein the raw pipe includes a double pipe comprising an outer metal pipe having a greater diameter and an inner pipe having a smaller diameter and inserted into the outer metal pipe, the method including:
a pre-forming step for pre-forming the outer metal pipe into an intermediate outer metal pipe having any of the elliptic, elongated circular, rectangular and polygonal cross-sectional shapes by passing the raw pipe through a set of pre-forming rolls; and
a diameter reducing step for re-forming the intermediate outer metal pipe into a circular cross-sectional shape or any other cross-sectional shape different from the cross-sectional shape of the intermediate outer metal pipe while at the same time reducing at least the outer circumferential length of the intermediate outer metal pipe to a smaller length than that of the original outer metal pipe, by passing the raw pipe through a set of diameter-reducing rolls disposed on the downstream side of the set of pre-forming rolls, wherein the pre-forming step and the diameter-reducing step are repeated several times, whereby the double pipe is finished by causing the inner circumferential surface of the outer metal pipe tightly to engage some or all of the outer circumferential surface of the inner pipe.

11. A cold roll forming method for reducing the diameter of a raw pipe, wherein the raw pipe includes a double pipe comprising an outer metal pipe having a greater diameter and an inner pipe having a smaller diameter and inserted into the outer metal pipe, the method including:
a pre-forming step for pre-forming the outer metal pipe into an intermediate outer metal pipe having any of the elliptic, elongated circular, rectangular and polygonal cross-sectional shapes by passing the raw pipe through a set of pre-forming rolls, wherein the pre-forming step is repeated one or more times; and
a diameter reducing step for re-forming the intermediate outer metal pipe into a circular cross-sectional shape or any other cross-sectional shape different from the cross-sectional shape of the intermediate outer metal pipe while at the same time reducing at least the outer circumferential length of the intermediate outer metal pipe to a smaller length than that of the original outer metal pipe, by passing the raw pipe through a set of diameter-reducing rolls disposed on the downstream side of the set of pre-forming rolls, wherein the diameter-reducing step is repeated one or more times, whereby the double pipe is finished by causing the inner circumferential surface of the outer metal pipe tightly to engage some or all of the outer circumferential surface of the inner pipe.

12. The cold roll forming method for reducing the diameter of a raw pipe, as defined in any one of Claims 9 through 11, wherein the inner pipe is inserted into the outer metal pipe so that the inner pipe and the outer metal pipe overlap each other along some or all of the total length of the outer metal pipe.

13. The cold roll forming method for reducing the diameter of a raw pipe, as defined in Claims 9 through 12, wherein said set of pre-forming rolls includes several sets of pre-forming rolls, and said set of diameter-reducing rolls includes several sets of diameter-reducing rolls, and wherein some or all of the rolls in each set of pre-forming rolls and some or all of the rolls in each set of diameter-reducing rolls are rotatably linked with each other, in order to permit the raw pipe to be moved through each set of pre-forming rolls and each set of diameter-reducing rolls.

14. The cold roll forming method for reducing the diameter of a raw pipe, as defined in any one of Claims 9 through 12, wherein said set of pre-forming rolls includes several sets of pre-forming rolls and said set of diameter-reducing rolls includes several sets of diameter-reducing rolls, and wherein some or all of the rolls in each set of pre-forming rolls and some or all of the rolls in each set of diameter-reducing rolls are idler rolls that are free from the external driving force, in order to permit the raw pipe to be moved through each set of pre-forming rolls and each set of diameter-reducing rolls by pushing the raw pipe from the upstream side into the bore formed by each set of pre-forming rolls and into the bore formed by each set of diameter-reducing rolls, by drawing the raw pipe through the bore formed by the rolls in each set of pre-forming rolls and through the bore formed by the rolls in each set of diameter-reducing rolls toward the downstream side, or by pushing the raw pipe from the upstream side into the bore formed by the rolls in each set of pre-forming rolls and into the bore formed by the rolls in each set of diameter-reducing rolls together with by drawing the raw pipe through the bore formed by the rolls in each set of pre-forming rolls and through the bore formed by the rolls in each set of diameter-reducing rolls toward the downstream side.

15. The cold roll forming method for reducing the diameter of a raw pipe, as defined in any one of Claims 9 through 14, wherein each of the rolls in the set of diameter-reducing rolls has a pattern of ridges and grooves formed on its surface, and wherein after the raw pipe has been pre-formed into an intermediate raw pipe having a particular cross-sectional shape, the intermediate raw pipe is passed through the following set of diameter-reducing rolls so that its outer metal pipe can have its diameter reduced while at the same time it can have the pattern of ridges and grooves formed on the surface of the outer metal pipe.

16. The cold roll forming method for reducing the diameter of a raw pipe, as defined in any one of Claims 9 through 15, wherein when the raw pipe is passed through the set of pre -forming rolls and then through the set of diameter-reducing rolls disposed on the downstream side of the set of pre-forming rolls, its outer metal pipe has its diameter reduced at the diameter reduction rate of 3 % or more.

17. A metal pipe product obtained by the cold roll forming method as defined in any one of Claims 1 through 16.
